# EUROPÄISCHE PATENTSCHRIFT

(11) **EP 3 062 088 B1**
(45) Veröffentlichungstag und Bekanntmachung des Hinweises auf die Patenterteilung: **01.02.2023**
(21) Anmeldenummer: 16159834.7
(22) Anmeldetag: 20.09.2012
(51) Int. Cl.: G01N 21/64, G01J 3/44, G01J 3/28, G01J 1/44, G02B 21/00

(54) **AUSWERTESCHALTUNG FÜR EINEN OPTOELEKTRONISCHEN DETEKTOR UND VERFAHREN ZUM AUFZEICHNEN VON FLUORESZENZEREIGNISSEN**
EVALUATION CIRCUIT FOR AN OPTO-ELECTRONIC DETECTOR AND METHOD FOR RECORDING FLUORESCENCE EVENTS
CIRCUIT D'EVALUATION POUR UN DETECTEUR OPTOELECTRIQUE ET PROCEDE D'ENREGISTREMENTS D'EVENEMENTS DE FLUORESCENCE

(30) Priorität: 30.09.2011 DE 102011114874
(43) Veröffentlichungstag der Anmeldung: 31.08.2016
(62) Teilanmeldung aus: 12778605.1
(73) Patentinhaber: Carl Zeiss Microscopy GmbH, 07745 Jena (DE)
(72) Erfinder: Möhler, Gunter, 04720 Mochau (DE); Schmidt, Dietmar, 07768 Bibra (DE); Holub, Oliver, 07745 Jena (DE); Hauschild, Robert, 1090 Wien (AT)
(74) Vertreter: Loritz, Rainer

(56) Entgegenhaltungen:
- WO-A2-2010/045400
- DE-A1-102006 034 905
- DE-A1-102008 029 458
- Xilinx: "Summary of Virtex-4 Family Features", DS112, 30. August 2010 (2010-08-30), XP055282610, Gefunden im Internet: URL:http://data.datasheetlib.com/pdf1/4/76 /47656/xc4vfx12-10ffg668c_38c0ae7fbe.pdf?t ake=binary [gefunden am 2016-06-22]

## Beschreibung

Die Erfindung betrifft eine Auswerteschaltung zum Auswerten der elektrischen Signale eines optoelektronischen Detektors, insbesondere bei der Aufnahme von Fluoreszenzereignissen unter Anregung mittels Lichtpulsen, umfassend einen Analog-Digital-Wandler (ADC) mit einem Eingang zur Verbindung mit einem Ausgang des Detektors und mit einem Ausgang zur Ausgabe eines Digitalwerts, sowie ein Verfahren zum Aufzeichnen von Fluoreszenzereignissen mittels eines optoelektronischen Detektors, insbesondere in einem Mikroskop, wobei Lichtpulse mittels einer Lichtquelle auf eine Probe eingestrahlt werden und mittels des Detektors Licht von der Probe aufgenommen und in ein elektrisches Signal gewandelt und einem Analog-Digital-Wandler zugeführt wird. Die Lichtpulse stellen eine Folge von Beleuchtungszyklen dar.

Der Begriff Licht umfasst dabei im Sinne der Erfindung nicht nur sichtbare (vom menschlichen Auge wahrnehmbare) elektromagnetische Strahlung, sondern jegliche elektromagnetische Strahlung, die mit optischen Mitteln (insbesondere Brechung, Beugung, Polarisierung und Streuung) manipulierbar ist, also beispielsweise infrarote und ultraviolette Strahlung.

Für eine hochempfindliche Fluoreszenzmessung ist Streulicht in jeder Form störend, unabhängig davon, ob es sich um direktes Anregungslicht, welches (trotz spektraler Separation) in den Detektionskanal gelangt, um diffuses Streulicht optischer Komponenten, um an Oberflächen reflektiertes Anregungslicht oder um aus der Probe gestreutes Licht (besonders Rayleigh- und Raman-Streulicht) handelt. Die Raman-Streuung findet an dem in den zu untersuchenden Proben enthaltenen Lösungsmittel statt und kann bei keiner Probenanregung verhindert werden. In wässrigen biologischen Proben liegt das durch Raman-Streuung entstehende Streulicht spektral typischerweise im Wellenlängenbereich der Fluoreszenzemission und stellt ein Hindernis für Präzisionsmessungen dar, welches durch die standardmäßig eingesetzte Spektralfilterung nicht beseitigt werden kann. Umgekehrt ist die Fluoreszenz störend für die Messung eines Raman-Spektrums, die typischerweise zur Bestimmung der in der Probe vorliegenden Moleküle erfolgt, da die Fluoreszenz spektral nicht aus dem Raman-Spektrum gefiltert werden kann.

Im Stand der Technik ist eine Auswerteschaltung für die Messung gepulst angeregter Fluoreszenz mit einem Analog-Digital-Wandler beispielsweise aus US 2001/0015411 A1 bekannt. Die dort beschriebene Auswerteschaltung erfordert jedoch eine Synchronisation des Analog-Digital-Wandlers mit den Lichtpulsen, so dass entweder nur Fluoreszenzlicht aufgenommen werden kann oder aber keine Unterscheidung zwischen Fluoreszenz- und Streulicht möglich ist, insbesondere auch nicht nachträglich.

In der WO 2010/045400 A2 ist eine Vorrichtung zum Messen eines analogen Signals eines Detektors offenbart. Die Vorrichtung umfasst einen Detektor zur Erfassung von Signalen, die von einer Probe ausgehen. Weiterhin ist ein Analog-Digital-Wandler zur Umsetzung der analogen Signale in digitale Signale vorhanden, die mittels einer logischen Schaltung in Form eines Schieberegisters analysiert werden. Die Erfassungsrate des Analog-Digital-Wandlers ist dabei größer als die Signalrate der Probe. Die logische Schaltung übermittelt die Analyseergebnisse an eine Speichervorrichtung.

Der Erfindung liegt die Aufgabe zugrunde, eine Auswerteschaltung der eingangs genannten Art zu verbessern, so dass eine hohe Empfindlichkeit der Detektion mit geringem Aufwand ermöglicht wird.

Die Aufgabe wird gelöst durch eine Auswerteschaltung, welche die in Anspruch 1 angegebenen Merkmale aufweist und durch ein Verfahren, welches die in Anspruch 3 angegebenen Merkmale aufweist.

Vorteilhafte Ausgestaltungen der Erfindung sind in den Unteransprüchen angegeben.

Die Auswerteschaltung weist ein Schieberegister mit mindestens einem (seriellen) Dateneingang, einem Takteingang, mehreren Registerstufen und mindestens einem (seriellen oder parallelen) Datenausgang aufweist, wobei der Ausgang des Analog-Digital-Wandlers (mittelbar oder unmittelbar) mit dem Dateneingang des Schieberegisters verbunden ist. Das Schieberegister ist in binärer Logik mehrere Bits breit, kann also in jeder Stufe mehrere Bits parallel aufnehmen. Ist das Schieberegister mehrere Bits breit, so können mehrere simultan detektierte Fluoreszenzereignisse in derselben Registerstufe gespeichert werden.

Erfindungsgemäß ist in jeder Registerstufe des mehrere Bit breiten Schieberegisters ein einzelnes Bit für einen Markierungswert reserviert, während die übrigen Bits für die Aufnahme der Digitalwerte zur Verfügung stehen. Durch den Markierungswert sind innerhalb eines Beleuchtungszyklus zwei Zeitfenster definiert.

Zweckmäßigerweise wird dem Analog-Digital-Wandler zu diesem Zweck ein Referenzwert vorgegeben, der einer zeitlich zusammenfallenden Detektion einer mit der Anzahl der Quantisierungsstufen übereinstimmenden Anzahl von Fluoreszenzereignissen entspricht. Der vom ADC ausgegebene Digitalwert ist dann größer als eins.

Mit der Erfindung können die zu unterschiedlichen Zeitpunkten mittels des Detektors aufgenommenen Lichtintensitäten in Form der mittels des Analog-Digital-Wandlers (A/D-Wandlers) ausgegebenen Digitalwerte unabhängig voneinander in den Stufen des Schieberegister gespeichert werden. Das ermöglicht später eine zeitaufgelöste Analyse der detektierten Fluoreszenzereignisse, ohne dass während der Detektion aufwendigerweise ein Zeitstempel zu jedem Ereignis gespeichert zu werden bräuchte. Die Speicherung jedes Digitalwerts erfolgt zweckmäßigerweise jeweils in der Eingangsstufe des Schieberegisters, welche in der Regel die erste Registerstufe ist. Der Begriff des Speicherns im Schieberegister umfasst dabei das Anlegen des Digitalwerts an einen Dateneingang des Schieberegisters (Eingangsstufe), beispielsweise in Form elektrischer Spannungen, die Bits repräsentieren, und das Verschieben der Inhalte der Registerstufen zur jeweils nächsten Stufe.

Bei der Fluoreszenzdetektion können durch die so geschaffene zeitliche Unterscheidungsmöglichkeit ohne aufwendige Zeitstempel und statistische Analyse derselben sowohl die elastische Rayleigh- als auch die Ramanstreuung des Anregungslichtes vollständig eliminiert werden. Zusätzlich können im Gegensatz zu bekannten Arten der zeitkorrelierten Einzelphotonenzählung (engl. "time-correlated single-photon counting", TCSPC) alle entstehenden Fluoreszenzphotonen, die vom Detektor registriert werden, verarbeitet werden.

Besonders vorteilhaft sind Ausführungsformen, in denen der Inhalt des Schieberegisters bei Auftreten eines von Null verschiedenen Digitalwerts um eine Stufe verschoben wird. Dazu ist vorzugsweise der Ausgang des Analog-Digital-Wandlers auch mit dem Takteingang des Schieberegisters verbunden. Zeitintervalle ohne Fluoreszenzereignis verbrauchen auf diese Weise keinen Speicherplatz im Schieberegister. Vorzugsweise erfolgt die Verschiebung ausschließlich bei Auftreten eines von Null verschiedenen Digitalwerts.

Alternativ sind Ausführungsformen möglich, in denen der Inhalt des Schieberegisters, insbesondere mittels eines Taktgebers, wiederholt nach einer vorgegebenen Zeit um eine Stufe verschoben wird. Dazu umfasst die Auswerteschaltung vorzugsweise einen Taktgeber mit einer vorgegebenen oder vorgebbaren Taktfrequenz, der mit dem Takteingang des Schieberegisters verbunden ist. In dieser Ausführungsform werden auch Zeitintervalle ohne Fluoreszenzereignis im Schieberegister gespeichert. Bei konstantem Takt entspricht jede Registerstufe einem von mehreren Zeitintervallen identischer Dauer. Anhand der Position im Register, also anhand der laufenden Nummer der jeweiligen Registerstufe, können also im Nachhinein die Zeitpunkte der einzelnen Fluoreszenzereignisse auch ohne Zeitstempel rekonstruiert werden, was gegenüber dem Stand der Technik eine Verringerung der notwendigen Übertragungsbandbreite ermöglicht. Die Genauigkeit der Rekonstruktion hängt ausschließlich von der Taktperiode ab. Zur Verringerung der zu übertragenden Datenmenge brauchen Intervalle, in denen keine Ereignisse aufgetreten sind, nicht übertragen oder gespeichert zu werden. Alternativ können solche Intervalle komprimiert werden, um Bandbreite zu sparen. Beispielsweise kann anstelle von N Nullwerten ein Nullwert und die Anzahl N übertragen oder gespeichert werden.

Vorzugsweise wird ein mit den anregenden Lichtpulsen (insbesondere mit deren Beginn) synchronisiertes Signal identifiziert und um eine vorgegebene oder vorgebbare Zeit danach ein Markierungswert neben dem Digitalwert in der Eingangsstufe gespeichert. Zu diesem Zweck kann die Auswerteschaltung eine Verzögerungsschaltung mit variabel einstellbarer zeitlicher Verzögerung umfassen, die einen Eingang für ein (einen Lichtpuls, insbesondere dessen Beginn, anzeigendes) Signal und einen Ausgang zur Ausgabe des Signals nach der (momentan) eingestellten Verzögerung aufweist, wobei der Ausgang der Verzögerungsschaltung derart mit dem Dateneingang des Schieberegisters verbunden ist, dass durch die Ausgabe des verzögerten Signals an dem Dateneingang neben dem Digitalwert ein Markierungswert, insbesondere ein Nullwert, anliegt. Die Verschiebung der Inhalte der Registerstufen zur jeweils nächsten Stufe erfolgt dann beispielsweise ausschließlich bei Auftreten eines von Null verschiedenen Digitalwerts und bei Ausgabe des verzögerten Signals. Beispielsweise kann im Falle eines mehrere Bit breiten Schieberegisters in jeder Registerstufe ein einzelnes Bit für den Markierungswert reserviert sein, während, bei einer Gesamtbreite von drei oder mehr Bits, die übrigen Bits, für die Aufnahme der Digitalwerte zur Verfügung stehen.

Der Markierungswert gibt den Zeitpunkt des Auftretens des verzögerten Signals relativ zu davor und danach im Schieberegister liegenden Fluoreszenzereignissen an und definiert so innerhalb jedes Beleuchtungszyklus zwei Zeitfenster. Das erlaubt die zeitliche Trennung von Streulicht und Fluoreszenzlicht, da Fluoreszenzlicht mit zeitlicher Verzögerung (im Nanosekundenzeitbereich) vom Anregungszeitpunkt emittiert wird, wohingegen Streuprozesse zeitlich so schnell stattfinden, dass sie (für alle praktischen Zwecke) als instantan zum Anregungszeitpunkt angesehen werden können. Je nach Zweck einer Messung können sowohl die detektierten Fluoreszenzintensitäten (beispielsweise für Fluoreszenzmikroskopie) als auch die detektierten Streulichtintensitäten (beispielsweise für Raman-Spektroskopie oder - Mikroskopie) zur weiteren Analyse und Bilderzeugung eingesetzt werden. In Ausführungsformen, in denen der Schiebetakt durch die Ausgabe des A/D-Wandlers bestimmt wird, definiert die gerätetechnische Ungenauigkeit in der Einstellung der Verzögerung das Auflösungsvermögen zwischen Streulicht und Fluoreszenzlicht. Die der Schiebefrequenz des Schieberegisters entsprechende Periode kann dann deutlich länger sein als die Verzögerung, ohne dass die Auswerteschaltung an Genauigkeit einbüßt. Bei konstantem Schiebetakt definiert hingegen die Taktperiode das Auflösungsvermögen zwischen Streulicht und Fluoreszenzlicht.

Die gepulste Lichtanregung in Kombination mit der zeitlich markierten Detektion erlaubt mit geringem Aufwand die zeitliche Separation von Fluoreszenzlicht- und Streulichtsignal. Auf diese Weise lassen sich alle oben erwähnten Streulichtformen vollständig unterdrücken und somit effizient vom zeitlich später emittierten Fluoreszenzlicht separieren. Auch das durch Raman-Streuung entstehende Licht wird mittels dieser Methode vollständig unterdrückt. Raman-Streulicht wird unabhängig von dem in der Probe verwendeten Lösungsmittel unterdrückt. Das erlaubt hochempfindliche Untersuchungen von Fluoreszenzemissionen niedrigster Lichtintensität (einer sehr geringen Anzahl fluoreszierender Moleküle), die bisher aufgrund überwiegenden Raman-Streulichts derzeitig nicht möglich sind und deshalb bis jetzt nur rein spektroskopischen Instrumenten hoher Empfindlichkeit zugänglich sind. Messungen von Raman-Spektren profitieren ebenfalls von der hier beschriebenen Methode, wenn nur das emittierte Licht, welches praktisch zeitgleich mit der Probenanregung emittiert wird, spektral analysiert wird. Die zeitliche Separation der Intensitätsanteile kann als Filtervorgang aufgefasst werden, der für die entsprechenden Einsatzzwecke Signale mit besserem Signal-Rausch-Verhältnis zur Verfügung stellt und somit eine Steigerung der Detektionsempfindlichkeit ermöglicht.

Als Beginn eines Lichtpulses kann beispielsweise das Überschreiten (in der ansteigenden Pulsflanke) eines vorgegebenen Anteils (beispielsweise 10% oder 50 %) der maximalen Lichtpuls-Intensität verwendet werden. Das den Beginn eines Lichtpulses anzeigende Signal kann beispielsweise nach optoelektronischer Wandlung des Lichtpulses mit einem entsprechenden Trigger erzeugt werden.

Vorteilhaft sind Ausführungsformen, in denen die Digitalwerte, die vor dem Markierungswert in dem Schieberegister gespeichert sind, und/oder die Digitalwerte, die nach dem Markierungswert in dem Schieberegister gespeichert sind, summiert werden, insbesondere vor der Übertragung der Summe über einen Datenbus zu einem Steuerrechner. Eine Auswerteschaltung kann zu diesem Zweck eine Ausleseschaltung mit einem Eingang für ein Auslösesignal, mindestens einem Dateneingang, der mit dem Datenausgang des Schieberegisters verbunden ist, und mindestens einen Summenausgang umfassen, wobei die Ausleseschaltung beim Anlegen des Auslösesignals die Registerstufen ausliest und vor dem Markierungswert gespeicherte Digitalwerte summiert und/oder nach dem Markierungswert gespeicherte Digitalwerte summiert und auf dem Summenausgang ausgibt. Die Summierung vor der Übertragung ermöglicht eine Verringerung der benötigten Bandbreite, so dass eine hohe Anregungspulsfrequenz verwendet werden kann.

Beispielsweise kann der Eingang der Ausleseschaltung mit dem Eingang der Verzögerungsschaltung verbunden sein, um das Auslösesignal bereitzustellen. Das Summieren beginnt dann mit dem nächsten Lichtpuls. Alternativ können die die Lichtpulse anzeigenden Signale in einer Schaltung separat verzögert und dann auf den Eingang der Ausleseschaltung gegeben werden. Zweckmäßigerweise ist diese Verzögerung derart, dass das Auslösesignal so vor dem jeweils nächsten Lichtpuls abgegeben wird, so dass der Auslesevorgang spätestens mit diesem nächsten Lichtpuls beendet ist.

Alternativ zur Summierung können die Registerinhalte also Rohdaten gespeichert und/oder übertragen werden.

Es ist möglich, pro Beleuchtungszyklus mehr als einen Markierungswert im Schieberegister zu speichern. Dazu kann die Auswerteschaltung beispielsweise eine entsprechende Anzahl von Verzögerungen (explizit zu diesem Zweck) entgegennehmen oder die zusätzlichen Verzögerungen aus (genau) einer vorgegebenen Verzögerung selbständig ermitteln. Jedes einen Lichtpuls anzeigende Signal gibt sie dann für jede dieser Verzögerungen verzögert aus, beispielsweise mittels einer entsprechenden Anzahl von Verzögerungsschaltungen. Mittels Z derartiger Verzögerungen können beispielsweise Z Markierungswerte im Schieberegister gespeichert werden. Dadurch werden Z+1 Zeitfenster definiert. Das ermöglicht beispielsweise eine Auswertung der Summen dieser Zeitfenster relativ zueinander. Unabhängig davon kann die Auswerteschaltung eine Verzögerung entgegennehmen, welche ein Ende der Detektion (vor Beginn des nächsten Beleuchtungszyklus) angibt.

Vorteilhaft ist es, wenn die Auswerteschaltung mindestens ein zusätzliches Schieberegister und eine Wechselschaltung umfasst, die (für mehrere aufeinanderfolgende Lichtpulse) die Schieberegister abwechselnd mit dem A/D-Wandler, insbesondere auch mit der Verzögerungsschaltung, verbindet. Dadurch kann ein Schieberegister zum Speichern dienen, während ein anderes ausgelesen wird. Beispielsweise kann der Eingang der Wechselschaltung mit dem Eingang der Verzögerungsschaltung verbunden sein. Alternativ können die die Lichtpulse anzeigenden Signale in einer Schaltung separat verzögert und dann auf den Eingang der Wechselschaltung gegeben werden.

Die Erfindung kann in einem Mikroskop, welches insbesondere ein konfokales Rastermikroskop ist, mit einer für Pulsbetrieb geeigneten Lichtquelle, einem Pulsgeber zur Steuerung der Lichtquelle zur Emission von Lichtpulsen oder einem Pulsmonitor zur Überwachung der erzeugten Lichtpulse, einem optoelektronischen Detektor in einer der oben beschriebenen Ausgestaltungen enthalten sein, wobei der Eingang des Analog-Digital-Wandlers mit dem Ausgang des Detektors verbunden oder mittels eines Schalters verbindbar ist. Ein Pulsmonitor kann beispielsweise eine Photodiode sein, auf die ein Anteil der emittierten Lichtintensität gelenkt wird.

Dabei kann die Auswerteschaltung eine Verzögerungsschaltung mit vorgegebener oder vorgebbarer Verzögerung aufweisen, deren Signaleingang mit dem Pulsgeber oder dem Pulsmonitor verbunden ist. Dabei umfasst das Mikroskop vorzugsweise eine Bedienvorrichtung zum Einstellen der Verzögerung der Verzögerungsschaltung, insbesondere einen Schieber, insbesondere in einer grafischen Benutzeroberfläche einer Steuereinheit als Bedienvorrichtung. Das erlaubt eine Kalibrierung der Verzögerung des einen Lichtpuls anzeigenden Signals zur Speicherung des Markierungswerts, so dass der Markierungswert zum Endzeitpunkt jedes anregenden Lichtpulses im Schieberegister (relativ zum Anfangszeitpunkt) gespeichert wird. Diese Verzögerung ist charakteristisch für die gepulste Lichtquelle, so dass die Kalibrierung für jede gepulste Lichtquelle nur einmal notwendig ist. Vorteilhafterweise kann die Verzögerungsschaltung daher eine einer Dauer der Lichtpulse entsprechende Verzögerung aufweisen, die beispielsweise werksseitig vorgegeben werden kann. Die Einstellung der Verzögerung kann vorzugsweise (auch) durch den Benutzer vorgenommen werden, der somit je nach Applikation die Anregungslichtunterdrückung einstellen könnte: Besseres Signal-Rausch-Verhältnis durch Einstellen einer ersten Verzögerung, bei welcher das verzögerte den Lichtpuls anzeigende Signal (direkt) nach dem Ende des Lichtpulses ausgegeben wird, für eine empfindlichere Messung oder schlechteres Signal-Rausch-Verhältnis durch Einstellen einer ersten Verzögerung, bei welcher das verzögerte den Lichtpuls anzeigende Signal während des Lichtpulses, aber vor dem Ende des Lichtpulses ausgegeben wird, für eine schnellere Messung.

Als Ende eines Lichtpulses kann beispielsweise das Unterschreiten (in der abfallenden Pulsflanke) eines vorgegebenen Anteils (beispielsweise 10% oder 50 %) der maximalen Lichtpuls-Intensität angesehen werden.

Nachfolgend wird die Erfindung anhand von Ausführungsbeispielen näher erläutert.

In den Zeichnungen zeigen:
Fig. 1. ein nicht zur Erfindung gehörendes Mikroskop mit einer Auswerteschaltung in schematischer Darstellung,
Fig. 2 eine erste Auswerteschaltung mit einem Schieberegister in schematischer Darstellung,
Fig. 3 ein Diagramm zur Verdeutlichung der Zuordnung von Fluoreszenzereignissen zu Registerstufen bei der ersten Auswerteschaltung,
Fig. 4 eine zweite Auswerteschaltung mit zwei Schieberegistern in schematischer Darstellung.
Fig. 5 eine dritte Auswerteschaltung mit einem Schieberegister in schematischer Darstellung und
Fig. 6 ein Diagramm zur Verdeutlichung der Zuordnung von Fluoreszenzereignissen zu Registerstufen bei der zweiten Auswerteschaltung.

In allen Zeichnungen tragen übereinstimmende Teile gleiche Bezugszeichen.

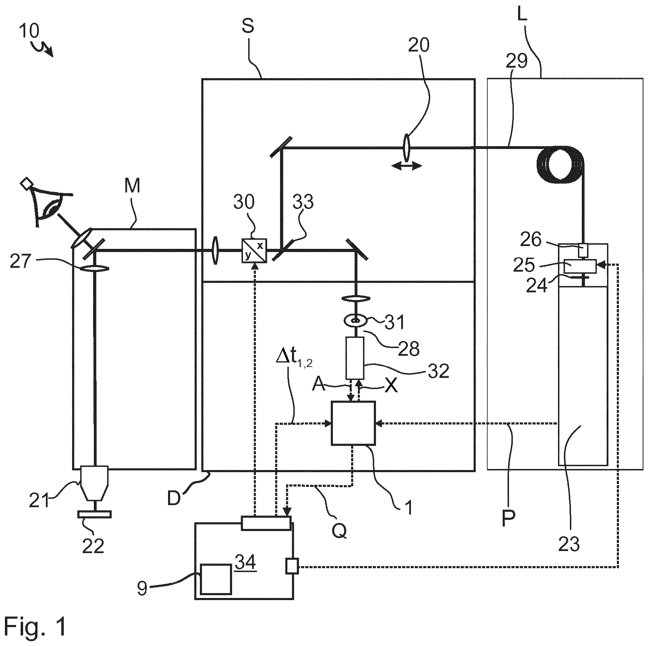

In der nicht zur Erfindung gehörenden **Fig. 1** ist eine Auswerteschaltung 1 in einem Laser-Scanning-Mikroskop 10 (LSM) schematisch dargestellt. Das LSM 10 ist modular aus einem Beleuchtungsmodul L mit einem gepulsten Laser als Lichtquelle 23, einem Abtastmodul S (engl. "scanning module"), einem Detektionsmodul D und der Mikroskopeinheit M mit dem Mikroskopobjektiv 21 zusammengesetzt.

Das Licht des Lasers 23 kann durch eine Lichtklappe 24 und einen Abschwächer 25, beispielsweise ein akustooptischer einstellbarer Filter (engl. "acousto-optic tunable filter"; AOTF), von der Steuereinheit 34 beeinflusst werden, bevor es über den Faserkoppler 26, die Lichtleitfasern 29 und die Koppeloptik 20 in die Abtasteinheit S eingespeist wird. Über den Hauptstrahlteiler 33 und die X-Y-Abtasteinheit 30 (engl. "scanner"), die beispielsweise zwei Galvanometerspiegel aufweist (nicht dargestellt), gelangt es durch das Mikroskopobjektiv 21 zur Probe 22, wo es ein Fokusvolumen (nicht abgebildet) beleuchtet. Die gepulste Lichtquelle 23 gibt mit jedem Lichtpuls ein den Beginn des Lichtpuls anzeigendes Signal P aus, beispielsweise mittels eines Triggers, der an eine Monitordiode angeschlossen ist und so die ansteigende Flanke der Beleuchtungsintensität anzeigt.

In anderen Ausführungsformen (nicht abgebildet) können die Einkopplung in Lichtleitfasern und insbesondere die Lichtleitfasern entfallen.

In der Probe 22 gestreutes Licht und emittiertes Fluoreszenzlicht gelangt durch das Mikroskopobjektiv 21 und weiter über die Abtasteinheit 30 durch den Hauptstrahlteiler 33 in das Detektionsmodul D. Der Hauptstrahlteiler 33 kann beispielsweise als dichroitischer Farbteiler ausgebildet sein, um Anregungslicht möglichst weitgehend vom Detektionsmodul D fernzuhalten. Das Detektionsmodul D weist beispielhaft einen Detektionskanal mit einer Lochblende 31, einem Filter 28 und einem Detektor 32, beispielsweise einem Photovervielfacher (PMT), auf. Der Detektor 32 ist beispielsweise mit einer Betriebsschaltung gemäß US 2001/0015411 A1 ausgerüstet. Anstelle einer Lochblende 31 kann, beispielsweise bei linienförmiger Beleuchtung, auch eine Schlitzblende (nicht abgebildet) verwendet werden. Die konfokale Lochblende 31 dient der Diskriminierung von Probenlicht, das nicht aus dem Fokusvolumen stammt. Der Detektor 32 detektiert daher ausschließlich Licht aus dem Fokusvolumen. Er ist mit einer Auswerteschaltung 1 verbunden. In anderen Ausführungsformen (nicht dargestellt) kann die Auswerteschaltung 1 in den Detektor 32 integriert sein, alternativ kann sie außerhalb des Detektionsmoduls D angeordnet sein.

Das konfokal beleuchtete und aufgenommene Fokusvolumen kann mittels der Abtasteinheit 30 entlang eines Rasters durch die Probe 22 bewegt werden, um pixelweise ein Bild aufzunehmen, indem die Galvanometerspiegel der Abtasteinheit 30 gezielt verdreht werden. Sowohl die Bewegung der Galvanometerspiegel als auch das Schalten der Beleuchtung mittels der Lichtklappen 24 oder der Abschwächer 25 als auch die Auswerteschaltung 1 werden von der Steuereinheit 34 über eine oder mehrere entsprechende Schnittstellen gesteuert. Insbesondere kann die Steuereinheit 34 der Auswerteschaltung 1 eine erste Verzögerung Δt₁ und optional eine zweite Verzögerung Δt₂ vorgeben. Die Steuereinheit kann mit einem jeweiligen Schieber zur Einstellung der Verzögerungen Δt₁, Δt₂ ausgerüstet sein, um einem Benutzer zu erlauben, die Verzögerungen Δt₁, Δt₂ einzustellen. Derartige Schieber können beispielsweise mittels einer grafischen Benutzeroberfläche in einem Anzeigegerät der Steuereinheit 34 als Bedienelemente bereitgestellt werden, wo der Benutzer sie mittels einer Maus oder mittels eines berührungsempfindlichen Mediums betätigen kann.

Die Auswerteschaltung 1 ist zudem mit der Lichtquelle 23 verbunden, welche, beispielsweise mittels einer mit dem Strahlengang gekoppelten Monitordiode (nicht abgebildet), der ein Trigger nachgeschaltet ist, an die Auswerteschaltung 1 mit Beginn jedes Lichtpulses ein den Lichtpuls anzeigendes Signal P (das Triggersignal) ausgibt. Der Detektor 32 gibt sein Intensitätssignal A, im Falle des PMT ist es das analoge Anodensignal, an die Auswerteschaltung 1 ab, die daraus digitale Intensitätswerte Q ermittelt. Seine Betriebsschaltung nimmt beispielsweise ein Schaltsignal X zur Schnellabschaltung seiner Verstärkungsfunktion von der Auswerteschaltung 1 entgegen. Diese Betriebsschaltung und die Mittel zum Übertragen des Schaltsignals X können in anderen Ausführungsformen entfallen. Die Datenaufnahme der Intensitätswerte Q von der Auswerteschaltung 1 des Detektors 32 erfolgt durch die Steuereinheit 34. Die Auswerteeinheit/Steuereinheit 34 kann beispielsweise ein handelsüblicher elektronischer Rechner (engl. "computer") sein. Zur Übertragung der Daten F und Δt_{1(,2)} ist die Steuereinheit 34 mit der Auswerteschaltung 1 verbunden, beispielsweise über einen Datenbus auf Basis von LVDS.

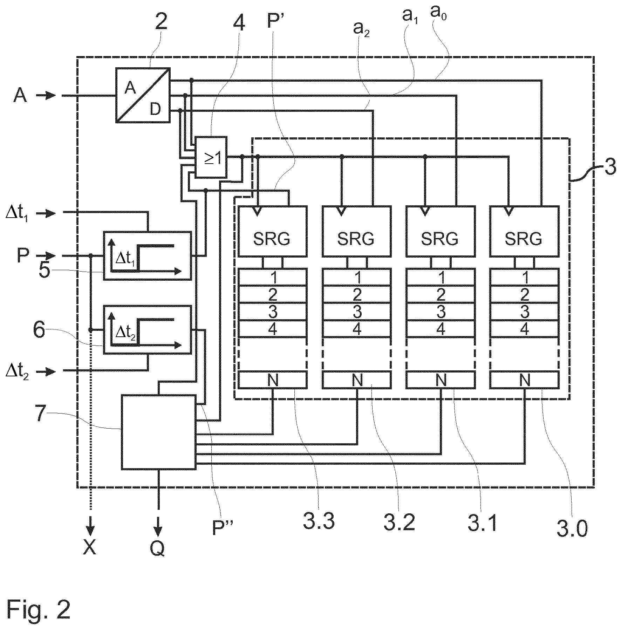

Fig. 2 zeigt schematisch eine erste erfindungsgemäße Auswerteschaltung 1, die beispielsweise in dem Mikroskop 10 gemäß Fig. 1 eingesetzt werden kann. Sie kann mittels einer feldprogrammierbaren Logikgatteranordnung (engl. "field-programmable gate array"; FPGA) realisiert werden. Sie umfasst einen Analog-Digital-Wandler 2, ein Schieberegister 3 (SRG), ein Verknüpfungsgatter 4, eine erste Verzögerungsschaltung 5, eine zweite Verzögerungsschaltung 6 und eine Ausleseschaltung 7. Der ADC 2 weist beispielsweise drei Quantisierungsstufen auf und kann daher maximal 7 Photonen, deren Intensitätskurven sich zeitlich überlappen, zählen und die Anzahl als Digitalwert a ausgeben. Zu diesem Zweck ist er beispielsweise an eine Referenzspannung angeschlossen, die einem Intensitätssignal A von sieben zeitlich zusammenfallenden Fluoreszenzereignissen entspricht. Das SRG 3 ist vier Bits breit, also ein Bit breiter als zur Speicherung der Digitalwerte a notwendig, und N Bits lang, beispielsweise N=64. Intern ist es beispielsweise aus vier Schieberegistern 3.0, 3.1, 3.2 und 3.3 einer Breite von jeweils einem Bit und einer Länge von jeweils N=64 aufgebaut.

Die Auswerteschaltung 1 kann beispielsweise als Steckmodul ausgebildet sein, so dass es mit geringem Aufwand gegen eine andere Auswerteschaltung austauschbar ist. Zu diesem Zweck können Steckkontakte für die Entgegennahme des Detektorsignals A, des einen Beginn eines Lichtpulses anzeigenden Signals P und der Verzögerungen Δt₁ und Δt₂ und für die Ausgabe von Intensitätswerten Q und optional des Schaltsignals X vorgesehen sein. Da die zweite Verzögerung nur von der Dauer des beleuchtenden Lichtpulses abhängt, kann anstelle der Entgegennahme als Variable die erste Verzögerung Δt₁ fest vorgegeben werden.

Drei Bits des Dateneingangs des SRG 3 sind mit dem Ausgang des ADC 2 so verbunden, dass der momentan vom ADC 2 ausgegebene Digitalwert a an der Eingangsstufe des SRG 3 anliegt. Das vierte Bit des Dateneingangs des SRG 3 ist mit dem Ausgang der ersten Verzögerungsschaltung 5 verbunden und dient dadurch zur Speicherung eines Markierungsbits als Markierungswert für den Ablauf der eingestellten ersten Verzögerung Δt₁ im aktuellen Beleuchtungszyklus.

Der Takteingang des SRG 3 ist über das Oder-Verknüpfungsgatter 4 ebenfalls mit dem Ausgang des ADC 2 verbunden. Über dasselbe Gatter 4 ist er auch mit der Auswerteschaltung 1 und mit der ersten Verzögerungsschaltung 5 verbunden. Das Oder-Gatter 4 bewirkt, dass die Inhalte der Registerstufen in die jeweils nächste Registerstufe verschoben werden, wenn mindestens einer der Eingänge des Verknüpfungsgatters 4 gesetzt wird. Beispielsweise wird, sobald durch die Wandlung des Intensitätssignals A im ADC 2 mindestens eines der Datenbits a₀, a₁, a₂ gesetzt wird, der aus diesen Bits bestehende Digitalwert a im SRG 3 gespeichert. Eine Speicherung erfolgt auch dann, wenn die erste Verzögerungsschaltung 5 um die Dauer Δt₁ nach dem Eintreffen des einen Lichtpuls anzeigenden Signals P das verzögerte Signal P' ausgibt. Der momentane Digitalwert a wird dann neben dem Markierungsbit im SRG 3 gespeichert.

Anstelle der direkten Verbindung des Oder-Gatters 4 mit dem Ausgang des ADC 2 kann in alternativen Ausführungsformen (nicht abgebildet) ein digitaler Komparator zwischen den ADC 2 und das Oder-Gatter 4 geschaltet sein, der den anliegenden Digitalwert a mit dem in der ersten Registerstufe gespeicherten Wert vergleicht und seinen Ausgang ausschließlich dann setzt, wenn sich der gespeicherte Wert vom momentanen Digitalwert a unterscheidet. Auf diese Weise können auch Abfolgen von abnehmenden (von Null verschiedenen) Intensitätswerten A gespeichert werden.

Nach Ablauf der zweiten Verzögerung Δt₂ gibt die zweite Verzögerungsschaltung 6 das zweite verzögerte Signal P" aus und zeigt damit das Ende der Aufzeichnung im momentanen Beleuchtungszyklus an. Zweckmäßigerweise wird die zweite Verzögerung Δt₂ so vorgegeben, dass die verbleibende Zeit vom zweiten verzögerten Signal P" bis zum nächsten einen Beginn eines Lichtpulses anzeigenden Signal P ausreicht, um das Schieberegister auszulesen. Da die nötige verbleibende Zeit nur von der Länge des SRG 3 und dessen maximalen Taktfrequenz abhängt, kann anstelle der Entgegennahme von der Steuereinheit als Variable die zweite Verzögerung Δt₂ fest vorgegeben werden.

Während eines jeden Beleuchtungszyklus nimmt die Ausleseschaltung 7 parallel zum SRG 3 dessen Taktsignal entgegen, um die Anzahl W der gefüllten Registerstufen zu zählen. Sobald die Ausleseschaltung 7 das zweite verzögerte Signal P" empfängt, schiebt sie das Schieberegister um die N-W ungenutzten Stufen und liest dann seriell jeweils die letzte Stufe des SRG 3 aus und verschiebt den Inhalt des SRG 3 um eine Stufe, indem sie einen Eingang des Oder-Gatters 4 setzt und wieder zurücksetzt. Alternativ zum seriellen Auslesen kann die Ausleseschaltung 7 auch so mit dem SRG 3 verbunden sein, dass es mehrere oder alle Stufen parallel auslesen kann.

Die Ausleseschaltung summiert die aus dem SRG 3 ausgelesenen 3-Bit-Digitalwerte a in einem ersten Zähler solange, bis sie im vierten Bit einer Registerstufe das Markierungsbit identifiziert. Dann summiert sie die übrigen 3-Bit-Digitalwerte a in einem zweiten Zähler. Die Zähler können nach dem letzten Digitalwert a als digitale Intensitätswerte Q ausgegeben und dann initialisiert werden. Alternativ werden sie über mehrere Beleuchtungszyklen fortgezählt und erst dann ausgegeben. Wenn nur Streuintensitäten gemessen werden sollen, können die Zählung und Ausgabe auf den ersten Zähler beschränkt sein. Entsprechend können die Zählung und Ausgabe auf den zweiten Zähler beschränkt sein, wenn nur Fluoreszenzereignisse gemessen werden sollen. Die Ausleseschaltung 7 benötigt in solchen Ausführungsformen nur einen Zähler.

Das den Lichtpuls anzeigende Signal P wird von der Auswerteschaltung 1 beispielsweise ohne Manipulation als Schaltsignal X zum Detektor 2 durchgereicht. Dieser schaltet daraufhin eine seiner Betriebsspannungen, beispielsweise die erste Dynodenspannung, ab oder um oder verringert sie zumindest, und schützt sich so vor Blendung durch eine hohe Lichtintensität zu schützen. Alternativ zum einfachen Weiterreichen des den Lichtpuls anzeigenden Signals P als Schaltsignal X könnte die Auswerteschaltung 1 oder eine separate Schaltung (nicht abgebildet) das Zurücksetzen des Schaltsignals X verzögern, beispielsweise mittels eines Abtast-Halte-Glieds (engl. "sample and hold circuit").

Um zusätzlich oder alternativ zu Fluoreszenzereignissen Ramanstreuung aufnehmen zu können, darf der Detektor während des beleuchtenden Lichtpulses nicht desaktiviert werden. Die Ausleseschaltung 1 kann das Schaltsignal X daher in alternativen Ausführungsformen vollständig unterdrücken. Vorzugsweise nimmt die Auswerteschaltung 1 von der Steuereinheit 34 ein weiteres Signal entgegen, anhanddessen sie erkennt, ob Schaltsignale X erzeugt oder unterdrückt werden sollen.

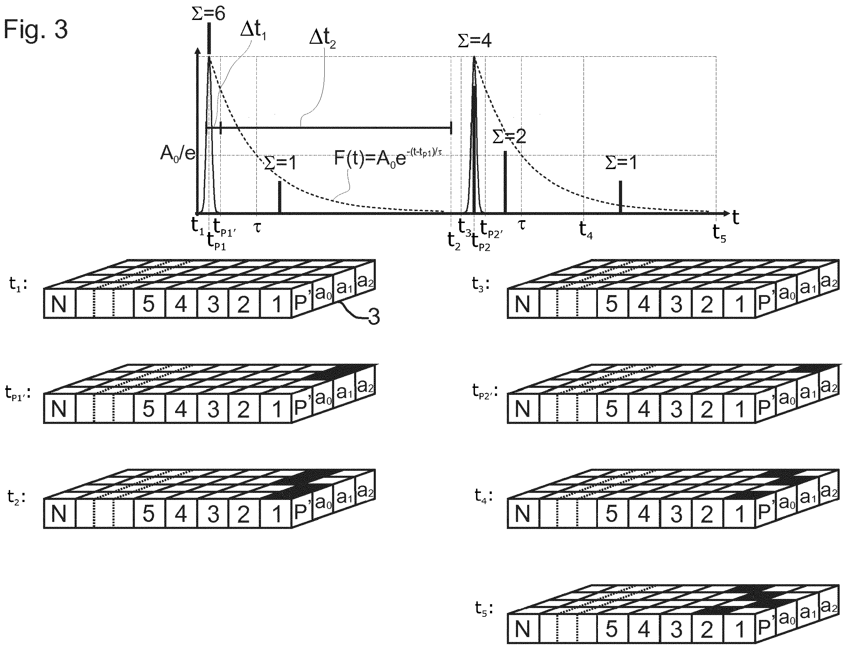

In **Fig. 3** sind eine Abfolge von Fluoreszenzereignissen und die darauf resultierenden Einträge in das Schieberegister 3 dargestellt, wenn eine Auswerteeinheit gemäß Fig. 2 verwendet wird. Das Schieben des SRG 3 erfolgt in der Abbildung nach links. In den Beleuchtungszyklen ist der Verlauf des beleuchtenden Lichtimpulses neben der exponentiellen Abklingkurve der Fluoreszenz angedeutet. Detektierte Photonen sind durch fett gezeichnete Striche angedeutet. Im ersten Beleuchtungszyklus [t₁,t₃[ werden vom Detektor 2 beispielhaft zunächst sechs gestreute Photonen und später ein einzelnes Fluoreszenzereignis detektiert. Im zweiten Beleuchtungszyklus [t₃,t₅[ werden beispielhaft zunächst vier gestreute Photonen, danach zwei gleichzeitig auftretende Fluoreszenzereignisse und später ein einzelnes Fluoreszenzereignis detektiert.

Der Stand des SRG 3 ist zu fünf verschiedenen Zeitpunkten dargestellt. Am Beginn jedes Beleuchtungszyklus (t1, t3, ...) ist es leer. Zu den späteren Zeitpunkten sind die gesetzten Bits durch schwarze Felder markiert. Es ist erkennbar, wie bereits gespeicherte Digitalwerte a erhalten bleiben und nach links geschoben werden, wenn neue Digitalwerte a ermittelt wurden. Da das SRG 3 nur bei Bedarf, also bei tatsächlich detektierten Photonen geschoben wird, befindet sich das Markierungsbit für das Auftreten des verzögerten Signals P' am Ende eines Beleuchtungszyklus nicht immer in derselben Registerstufe.

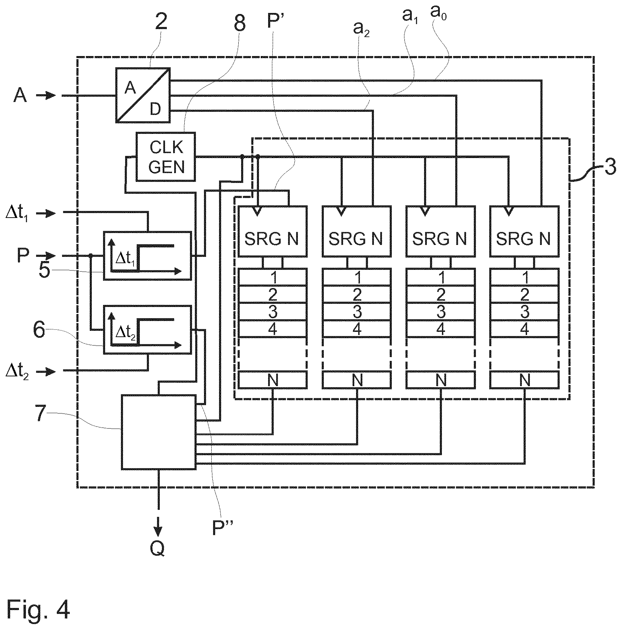

**Fig. 4** zeigt schematisch eine zweite Auswerteschaltung 1, die beispielsweise in Fig. 1 eingesetzt werden kann. Im Unterschied zu der in Fig. 2 gezeigten Auswerteschaltung 1 weist sie kein Verknüpfungsgatter, sondern einen Taktgenerator 8 auf, der das Schieberegister 3 am Takteingang mit einem festen Takt beaufschlagt und so kontinuierlich verschiebt. Die Ausleseschaltung 7 kann den Taktgenerator 8 ein- und ausschalten. In weitergehenden Ausführungsformen kann sie auch die Taktfrequenz einstellen, beispielsweise gemäß einem weiteren von der Steuereinheit 34 entgegenzunehmenden Signal F (nicht abgebildet).

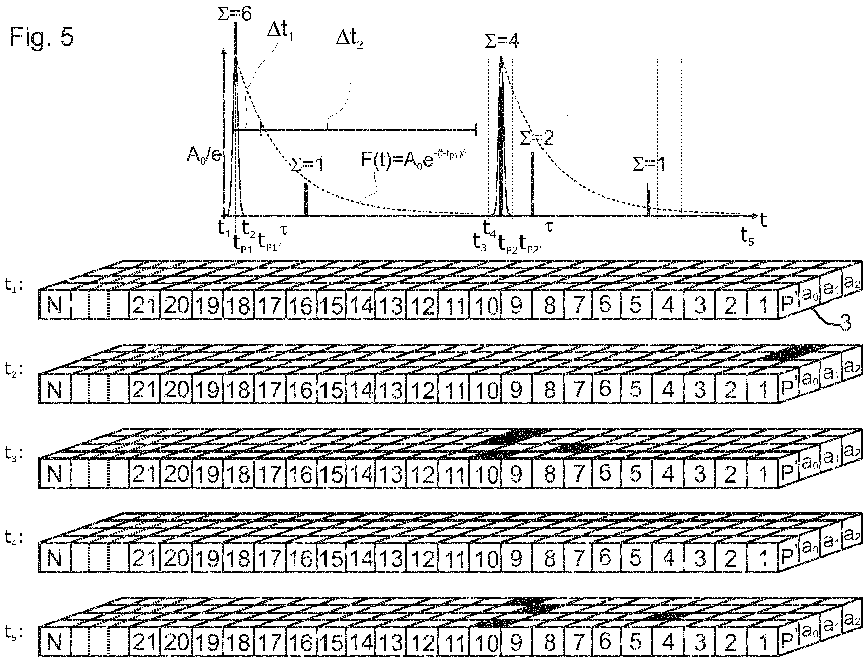

In **Fig. 5** sind eine Abfolge von Fluoreszenzereignissen und die darauf resultierenden Einträge in das Schieberegister 3 dargestellt, wenn eine Auswerteeinheit gemäß Fig. 4 verwendet wird. Erkennbar ist, dass das Markierungsbit für das verzögerte Signal P' aufgrund des festen Takts unabhängig von der Detektion von Photonen in jedem Beleuchtungszyklus in derselben Stufe liegt.

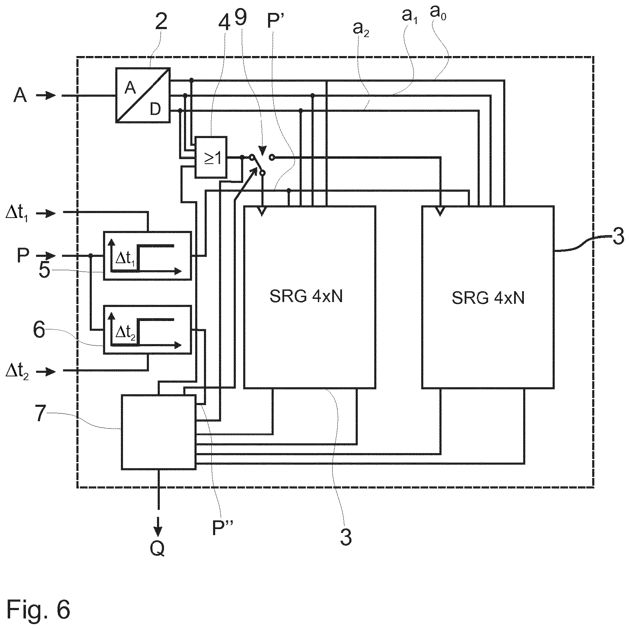

**Fig. 6** zeigt schematisch eine dritte Auswerteschaltung 1, die beispielsweise in Fig. 1 eingesetzt werden kann. Zusätzlich zu der in Fig. 2 gezeigten Auswerteschaltung 1 weist sie ein zweites Schieberegister 3 auf. Die beiden Schieberegister 3 werden abwechselnd zur Speicherung benutzt, indem der Schalter 9 umgeschaltet wird. Bei ungeradzahligen Lichtpulsen werden die im betreffenden Messintervall auftretenden Fluoreszenzereignisse in das erste Schieberegister 3 gespeichert, bei geradzahligen Lichtpulsen werden die im betreffenden Messintervall auftretenden Fluoreszenzereignisse in das zweite Schieberegister 3 gespeichert. Während in das eine Schieberregister 3 gespeichert wird, kann das andere ausgelesen werden. Dadurch kann beispielsweise die zweite Verzögerungsschaltung 6 entfallen, wenn die Ausleseschaltung 7 das unverzögerte Signal P entgegennimmt und den Schalter 9 umschaltet, sobald sie ein solches Signal P detektiert. Das jeweils nicht mit dem Gatter 4 verbundene SRG 3 kann sie dann mittels einer separaten Taktleitung (der Übersichtlichkeit halber nicht abgebildet) seriell oder alternativ parallel auslesen.

Auch in einer Ausführungsform gemäß Fig. 2 können zwei (oder mehr) Schieberegister 3 alternierend zum Speichern und Auslesen geschaltet sein.

### Bezugszeichenliste

- 1: Auswerteschaltung
- 2: Analog-Digital-Wandler
- 3: Schieberegister
- 4: Oder-Verknüpfungsgatter
- 5: Erste Verzögerungsschaltung
- 6: Zweite Verzögerungsschaltung
- 7: Ausleseschaltung
- 8: Taktgenerator
- 9: Umschalter
- 10: Laser-Scanning-Mikroskop
- 20: Kollimationsoptik
- 21: Mikroskopobjektiv
- 22: Probe
- 23: Laser
- 24: Lichtklappe
- 25: Abschwächer
- 26: Faserkoppler
- 27: Tubuslinse
- 28: Filter
- 29: Dichroitischer Strahlteiler
- 30: Abtasteinheit
- 31: Lochblende
- 32: Photovervielfacher
- 33: Hauptstrahlteiler
- 34: Steuereinheit
- 35: Lichtquelle

## Patentansprüche

1. Auswerteschaltung (1) zum Auswerten der elektrischen Signale (A) eines zur Detektion von Photonen ausgebildeten optoelektronischen Detektors (32) bei der Aufnahme von Fluoreszenzereignissen unter Anregung mittels Lichtpulsen, umfassend
- einen Analog-Digital-Wandler (2) mit einem Eingang zur Verbindung mit einem Ausgang des Detektors (32) und mit einem Ausgang zur Ausgabe eines Digitalwerts (a),
ein Schieberegister (3) mit mindestens einem Dateneingang, einem Takteingang, mehreren Registerstufen und mindestens einem Datenausgang, wobei der Ausgang des Analog-Digital-Wandlers (2) mit dem Dateneingang des Schieberegisters (3) verbunden ist,
- wobei die Auswerteschaltung (1) so konfiguriert ist, dass mittels des Detektors (32) während eines Beleuchtungszyklus zu unterschiedlichen Zeitpunkten aufgenommene Lichtintensitäten in Form der mittels des Analog-Digital-Wandlers (2) ausgegebenen Digitalwerte unabhängig voneinander in den Stufen des Schieberegister gespeichert werden, indem die Digitalwerte an den Dateneingang des Schieberegisters (3) angelegt werden und die Inhalte der Registerstufen zur jeweils nächsten Registerstufe verschoben werden das Schieberegister (3) in binärer Logik drei oder mehr Bits breit ist und mehrere simultan detektierte Fluoreszenzereignisse in derselben Registerstufe gespeichert werden, **dadurch gekennzeichnet,**
- **dass** in jeder Registerstufe des mehrere Bit breiten Schieberegisters (3) ein einzelnes Bit für einen Markierungswert reserviert ist, während die übrigen Bits für die Aufnahme der Digitalwerte zur Verfügung stehen, wobei durch den Markierungswert innerhalb eines Beleuchtungszyklus zwei Zeitfenster definiert sind.

2. Auswerteschaltung (1) nach Anspruch 1, **gekennzeichnet durch** eine Verzögerungsschaltung (5) mit variabel einstellbarer erster zeitlicher Verzögerung (Δt1), die einen Eingang für ein, einen Lichtpuls anzeigendes Signal (P) und einen Ausgang zur Ausgabe eines verzögerten Signals (P') nach der momentan eingestellten ersten zeitlichen Verzögerung (Δt1) aufweist, wobei der Ausgang der Verzögerungsschaltung (5) derart mit dem Dateneingang des Schieberegisters (3) verbunden ist, dass **durch** die Ausgabe des verzögerten Signals (P') an dem Dateneingang neben dem Digitalwert (a) der Markierungswert anliegt.

3. Verwendung der Auswerteschaltung nach einem der Ansprüche 1 oder 2 zum Aufzeichnen von Fluoreszenzereignissen, **dadurch gekennzeichnet, dass** zur Anregung einer Probe (22) Lichtpulse mittels einer Lichtquelle (23) auf die Probe (22) eingestrahlt werden und mittels eines zur Detektion von Photonen ausgebildeten optoelektronischen Detektors (32) einer während eines Beleuchtungszyklus zu unterschiedlichen Zeitpunkten Licht von der Probe (22) aufgenommen, in ein elektrisches Signal gewandelt und dieses dem Analog-Digital-Wandler (2) zugeführt wird, und dass der vom Analog-Digital-Wandler (2) ausgegebene Digitalwert (a) in einer Eingangsstufe des Schieberegisters (3) gespeichert wird, indem die Digitalwerte (a) an den Dateneingang des Schieberegisters (3) angelegt werden und die Inhalte der Registerstufen zur jeweils nächsten Registerstufe verschoben werden, **dadurch gekennzeichnet, dass** ein mit den Lichtpulsen synchronisiertes Signal (P) identifiziert wird und um eine vorgegebene oder vorgebbare Zeit danach ein Markierungswert neben dem Digitalwert (a) in der Eingangsstufe gespeichert wird, wobei durch den Markierungswert innerhalb eines Beleuchtungszyklus zwei Zeitfenster definiert werden.

4. Verfahren nach Anspruch 3, **dadurch gekennzeichnet, dass** der Inhalt des Schieberegisters (3) bei Auftreten eines von Null verschiedenen Digitalwerts (a) um eine Stufe verschoben wird.

5. Verfahren nach Anspruch 3, **dadurch gekennzeichnet, dass** der Inhalt des Schieberegisters (3) mittels eines Taktgebers (3), wiederholt nach einer vorgegebenen Zeit um eine Stufe verschoben wird.

6. Verfahren nach einem der Ansprüche 3 bis 5, **dadurch gekennzeichnet, dass** die Digitalwerte (a), die vor dem Markierungswert in dem Schieberegister (3) gespeichert sind, und/oder die Digitalwerte (a), die nach dem Markierungswert in dem Schieberegister (3) gespeichert sind, summiert werden.

7. Verfahren nach einem der Ansprüche 3 bis 5 und unter Verwendung einer Auswerteschaltung (1) nach Anspruch 2, **dadurch gekennzeichnet, dass** die innerhalb des Zeitfensters der ersten zeitlichen Verzögerung (Δt1) im Schieberegister liegenden Fluoreszenzereignisse als Streulicht erfasst werden, wobei das Streulicht direktes Anregungslicht, welches trotz spektraler Separation in einen Detektionskanal gelangt, diffuses Streulicht optischer Komponenten, an Oberflächen reflektiertes Anregungslicht oder aus der Probe gestreutes Licht ist.

8. Verfahren nach Anspruch 7, **dadurch gekennzeichnet, dass** eine spektrale Trennung von Fluoreszenzstrahlung und Streulicht erfolgt.

9. Verfahren nach Anspruch 7, **dadurch gekennzeichnet, dass** Ramanspektren des Raman-Streulichts gemessen werden, indem in dem Zeitfenster der ersten zeitlichen Verzögerung (Δt1) emittiertes und erfasstes Licht spektral analysiert wird.

10. Verfahren nach einem der Ansprüche 3 bis 9, **dadurch gekennzeichnet, dass** in Form der ausgegebenen Digitalwerte (a) detektierte Fluoreszenzintensitäten und/oder detektierte Streulichtintensitäten zur Analyse und Bilderzeugung eingesetzt werden.

## Claims

1. Evaluation circuit (1) for evaluating the electrical signals (A) of an optoelectronic detector (32) during the recording of fluorescence events with excitation by means of light pulses, the said optoelectronic detector being designed to detect photons, comprising
- an analogue-to-digital converter (2) having an input for connection to an output of the detector (32) and having an output for outputting a digital value (a),
a shift register (3) having at least one data input, a clock input, a plurality of register stages and at least one data output, wherein the output of the analogue-to-digital converter (2) is connected to the data input of the shift register (3),
- wherein the evaluation circuit (1) is configured such that light intensities recorded at different times during an illumination cycle by means of the detector (32) and in the form of the digital values output by means of the analogue-to-digital converter (2) are stored independently of one another in the stages of the shift register by virtue of the digital values being applied to the data input of the shift register (3) and the contents of the register stages being shifted to the respective next register stage, the shift register (3) is three or more bits wide in binary logic and a plurality of simultaneously detected fluorescence events are stored in the same register stage, **characterized**
- **in that** a single bit for a marking value is reserved in each register stage of the shift register (3) a plurality of bits wide, while the remaining bits are available for recording the digital values, with two time windows within an illumination cycle being defined by the marking value.

2. Evaluation circuit (1) according to Claim 1, **characterized by** a delay circuit (5) having a variably adjustable first temporal delay (Δt1), which has an input for a signal (P) indicating a light pulse and an output for outputting a delayed signal (P') following the currently set first temporal delay (Δt1), wherein the output of the delay circuit (5) is connected to the data input of the shift register (3) in such a way that the marking value is present alongside the digital value (a) at the data input as a result of the outputting of the delayed signal (P').

3. Use of the evaluation circuit according to either of Claims 1 and 2 for recording fluorescence events, **characterized in that** light pulses are radiated onto a sample (22) by means of a light source (23) for the purposes of exciting the sample (22) and, during an illumination cycle and by means of an optoelectronic detector (32) designed to detect photons, light from the sample (22) is recorded at different times and converted into an electrical signal and the said electrical signal is fed to the analogue-to-digital converter (2), and
**in that** the digital value (a) output by the analogue-to-digital converter (2) is stored in an input stage of the shift register (3) by virtue of the digital values (a) being applied to the data input of the shift register (3) and the contents of the register stages being shifted to the respective next register stage,
**characterized in that**
a signal (P) that is synchronized with the light pulses is identified and a marking value is stored alongside the digital value (a) in the input stage after a specified or specifiable time, wherein the marking value defines two time windows within an illumination cycle.

4. Method according to Claim 3, **characterized in that** the content of the shift register (3) is shifted by one stage when a digital value (a) different from zero occurs.

5. Method according to Claim 3, **characterized in that** the content of the shift register (3) is shifted by one stage by means of a clock generator (3), repeatedly after a specified time.

6. Method according to any one of Claims 3 to 5, **characterized in that** the digital values (a) stored before the marking value in the shift register (3) and/or the digital values (a) stored after the marking value in the shift register (3) are summed.

7. Method according to any one of Claims 3 to 5 and using an evaluation circuit (1) according to Claim 2, **characterized in that** the fluorescence events located in the shift register within the time window of the first temporal delay (Δt1) are detected as scattered light, wherein the scattered light is direct excitation light, which reaches a detection channel despite spectral separation, diffuse scattered light from optical components, excitation light reflected at surfaces or light scattered from the sample.

8. Method according to Claim 7, **characterized in that** there is a spectral separation of fluorescence radiation and scattered light.

9. Method according to Claim 7, **characterized in that** Raman spectra of the Raman scattered light are measured by virtue of light emitted and detected within the time window of the first temporal delay (Δt1) being spectrally analysed.

10. Method according to any one of Claims 3 to 9, **characterized in that** detected fluorescence intensities and/or detected scattered light intensities in the form of the output digital values (a) are used for analysis and image generation purposes.

## Revendications

1. Circuit d'évaluation (1) destiné à évaluer les signaux électriques (A) d'un détecteur optoélectronique (32) conçu pour la détection de photons lors de l'acquisition d'événements de fluorescence par excitation au moyen d'impulsions lumineuses, comprenant
- un convertisseur analogique-numérique (2) comportant une entrée destinée à être connectée à une sortie du détecteur (32) et une sortie destinée à délivrer une valeur numérique (a),
un registre à décalage (3) comportant au moins une entrée de données, une entrée d'horloge, une pluralité d'étages de registre et au moins une sortie de données, dans lequel la sortie du convertisseur analogique-numérique (2) est connectée à l'entrée de données du registre à décalage (3),
- dans lequel le circuit d'évaluation (1) est configuré de manière à ce que des intensités lumineuses acquises au moyen du détecteur (32) pendant un cycle d'éclairage à différents instants soient stockées indépendamment les unes des autres dans les étages du registre à décalage sous la forme des valeurs numériques délivrées au moyen du convertisseur analogique-numérique (2), en faisant en sorte que les valeurs numériques soient appliquées à l'entrée de données du registre à décalage (3) et que les contenus des étages de registre soient décalés vers l'étage de registre respectif suivant, que le registre à décalage (3) ait une largeur de trois bits ou plus en logique binaire et que plusieurs événements de fluorescence détectés simultanément soient stockés dans le même étage de registre, **caractérisé en ce que**
- dans chaque étage de registre du registre à décalage (3) ayant une largeur de plusieurs bits, un seul bit est réservé pour une valeur de marquage, tandis que les autres bits sont disponibles pour l'acquisition des valeurs numériques, dans lequel deux fenêtres temporelles sont définies par la valeur de marquage au cours d'un cycle d'éclairage.

2. Circuit d'évaluation (1) selon la revendication 1, **caractérisé par** un circuit à retard (5) ayant un premier retard temporel réglable de manière variable (Δt1), qui présente une entrée destinée à un signal (P) indiquant une impulsion lumineuse et une sortie destinée à délivrer un signal retardé (P') après le premier retard temporel réglé de manière instantanée (Δt1), dans lequel la sortie du circuit à retard (5) est connectée à l'entrée de données du registre à décalage (3) de manière à ce que, du fait de la sortie du signal retardé (P'), la valeur de marquage soit présente à l'entrée de données en plus de la valeur numérique (a).

3. Utilisation du circuit d'évaluation selon l'une quelconque des revendications 1 ou 2 pour l'enregistrement d'événements de fluorescence, **caractérisée en ce que**, pour l'excitation d'un échantillon (22), des impulsions lumineuses sont injectées au moyen d'une source lumineuse (23) dans l'échantillon (22) et la lumière provenant de l'échantillon (22) est acquise à différents instants pendant un cycle d'éclairage au moyen d'un détecteur optoélectronique (32) conçu pour la détection de photons, est convertie en un signal électrique et ce dernier est délivré au convertisseur analogique-numérique (2), et **en ce que** la valeur numérique (a) délivrée par le convertisseur analogique-numérique (2) est stockée dans un étage d'entrée du registre à décalage (3), en faisant en sorte que les valeurs numériques (a) soient appliquées à l'entrée de données du registre à décalage (3) et que les contenus des étages de registre soient décalés vers l'étage de registre respectif suivant,
**caractérisée en ce qu'**un signal (P) synchronisé avec les impulsions lumineuses est identifié et, à un moment prédéterminé ou pouvant être prédéterminé après cela, une valeur de marquage est stockée dans l'étage d'entrée en plus de la valeur numérique (a), dans lequel deux fenêtres temporelles sont définies par la valeur de marquage au cours d'un cycle d'éclairage.

4. Procédé selon la revendication 3, **caractérisé en ce que** le contenu du registre à décalage (3) est décalé d'un étage lors de l'apparition d'une valeur numérique (a) différente de zéro.

5. Procédé selon la revendication 3, **caractérisé en ce que** le contenu du registre à décalage (3) est décalé d'un étage de manière répétée au bout d'un temps prédéterminé au moyen d'un générateur d'horloge (3).

6. Procédé selon l'une quelconque des revendications 3 à 5, **caractérisé en ce que** les valeurs numériques (a) qui sont stockées avant la valeur de marquage dans le registre à décalage (3) et/ou les valeurs numériques (a) qui sont stockées dans le registre à décalage (3) après la valeur de marquage, sont sommées.

7. Procédé selon l'une quelconque des revendications 3 à 5 et utilisant un circuit d'évaluation (1) selon la revendication 2, **caractérisé en ce que** les événements de fluorescence se produisant à l'intérieur de la fenêtre temporelle du premier retard temporel (Δt1) dans le registre à décalage sont détectés en tant que lumière parasite, dans lequel la lumière parasite est une lumière d'excitation directe qui atteint un canal de détection malgré la séparation spectrale, une lumière parasite diffuse de composants optiques, une lumière d'excitation réfléchie sur des surfaces ou une lumière diffusée par l'échantillon.

8. Procédé selon la revendication 7, **caractérisé en ce qu'**une séparation spectrale du rayonnement de fluorescence et de la lumière parasite est effectuée.

9. Procédé selon la revendication 7, **caractérisé en ce que** des spectres Raman de la lumière diffusée par diffusion Raman sont mesurés en analysant spectralement la lumière émise et détectée dans la fenêtre temporelle du premier retard temporel (Δt1).

10. Procédé selon l'une quelconque des revendications 3 à 9, **caractérisé en ce que** des intensités de fluorescence détectées et/ou des intensités de lumière diffusée détectées sous la forme des valeurs numériques (a) délivrées sont utilisées pour l'analyse et la formation d'images.
